# EUROPEAN PATENT SPECIFICATION

(11) **EP 2 708 621 B1**
(45) Date of publication and mention of the grant of the patent: **15.06.2016**
(21) Application number: 12877167.2
(22) Date of filing: 31.10.2012
(51) Int. Cl.: C23C 24/10, C22C 38/40, B23K 26/34

(54) **LASER CLADDING METHOD**
LASERBESCHICHTUNGSVERFAHREN
PROCÉDÉ DE PLAQUAGE LASER

(30) Priority: 22.05.2012 CN 201210159369
(43) Date of publication of application: 19.03.2014
(73) Proprietor: Shandong Energy Machinery Group Han's Remanufacture Co., Ltd., Xintai Shandong 271219 (CN)
(72) Inventor: LI, Xiyong, Xintai Shandong 271219 (CN); ZHOU, Feng, Xintai Shandong 271219 (CN); ZHANG, Yanliang, Xintai Shandong 271219 (CN); YANG, Qingdong, Xintai Shandong 271219 (CN); SU, Lunchang, Xintai Shandong 271219 (CN); DONG, Chunchun, Xintai Shandong 271219 (CN); TANTAI, Fanliang, Xintai Shandong 271219 (CN)
(74) Representative: Manitz, Finsterwald & Partner GbR
(86) International application number: PCT/CN2012/001475
(87) International publication number: WO 2013/173955

(56) References cited:
- CN-A- 101 854 029
- CN-A- 101 875 128
- CN-A- 101 942 657
- CN-A- 102 168 210
- CN-A- 102 242 361
- CN-A- 102 242 361
- CN-A- 102 392 242
- CN-A- 102 453 899
- CN-A- 102 453 899
- CN-A- 102 672 159
- CN-A- 102 676 940
- CN-A- 102 677 043
- CN-A- 102 677 044
- CN-A- 102 677 045
- CN-Y- 201 049 965
- BIRGER E M ET AL: "Industrial laser cladding: current state and future", WELDING INTERNATIONAL, TAYLOR & FRANCIS, ABINGDON, GB, vol. 25, no. 3, 1 March 2011 (2011-03-01), pages 234-243, XP001560771, ISSN: 0950-7116, DOI: 10.1080/09507116.2010.540880 [retrieved on 2011-03-01]
- JARI TUOMINEN ET AL: "<title>Corrosion resistant nickel superalloy coatings laser-clad with a 6 kW high power diode laser (HPDL)</title>", PROCEEDINGS OF SPIE, vol. 4831, 3 March 2003 (2003-03-03), pages 59-64, XP055148201, ISSN: 0277-786X, DOI: 10.1117/12.497958
- XIE, WENZHENG ET AL.: 'Study on Application of Laser Cladding Technology in Hydraulic Supports. Coal Mine Machinery.' COAL MINE MACHINERY. vol. 30, no. 10, October 2010, XP008171523

## Description

### FIELD OF INVENTION

The present invention relates to a laser cladding method which belongs to the art of laser processing. The features of the preamble of the independent claims are known from CN 102 242 361 A. Related technologies are known from CN 102 453 899 A and BIRGER E M ET AL: "Industrial laser cladding: current state and future", Welding International, Taylor & Francis, Abingdon, GB, vol.25, no. 3, 1 March 2011, pages 234-243, XP001560771.

### BACKGROUND

Hydraulic support columns are key components in mining equipments. In China, the hydraulic support columns are commonly surface treated with the method of chromium plating, so as to prevent the surface from rusting and to prevent corrosion. However, the abrasion performance of the plated chromium layer is poor, and usually, there may be peeling and scaling of the plated chromium layer after 1-1.5 years. Therefore, the surface of the column may be corroded by emulsion, so that the usage effect of the hydraulic support may be affected.

A laser cladding method for mining hydraulic support column is disclosed in Chinese Patent No. CN101875128B, by which three layers of metallurgy materials are clad under particular laser cladding process conditions, so that the problems about the abrasion performance and the anti-corrosion performance of the mining hydraulic support column surface are solved with the service life thereof increased. The detailed technical solution is: performing preheating after the mining hydraulic support column is surface treated, and then plating a bottom layer, a middle layer and a surface layer in sequence with alloy powder material for cladding. Wherein the chosen alloy powder material for cladding for the bottom layer includes 0.1% of C, 3.2% of Si, 0.5% of Mn, 10.2% of Cr, 8.8% of Ni, 0.8% of Nb, 0.1% of B, 0.5% of P and residual amount of Fe.

In the abovementioned laser cladding method, the laser used is a carbon dioxide laser, i.e., a laser functioning with carbon dioxide as gain medium. However, when a carbon dioxide laser is being used to perform laser cladding, the laser beam coming out from the carbon dioxide laser irradiates the hydraulic support column, and energy absorption and utilization efficiency of laser beam is very low. Also, electric energy consumption in the process is relatively large.

### SUMMARY OF THE INVENTION

In order to solve the abovementioned technical problems, in the present invention, a laser cladding method as defined in the independent claim is provided, with which energy absorption and utilization efficiency of laser beam is increased, the electric energy utilization efficiencyis increased, so that the power consumption is saved.

In detail, following are the technical solutions provided:

### Solution 1

### A laser cladding method, using laser beam emitted from a semiconductor laser to melt alloy powder for laser cladding on the surface of a hydraulic support column, so that a laser cladding layer is formed.

### Solution 2

The laser cladding method according to solution 1, changed in that the distance from a laser beam outlet of the semiconductor laser to the surface of the hydraulic support column is in the range of 150-250mm, and the power density of the laser beam emitted from the semiconductor laser is above 109.38W/mm2.

### Solution 3

The laser cladding method according to solution 2, changed in that the distance from the laser beam outlet of the semiconductor laser to the surface of the hydraulic support column is in the range of 190-220mm, and the power density of the laser beam emitted from the semiconductor laser is above 112.63W/mm2.

### Solution 4

The laser cladding method according to solution 3, changed in that the alloy powder for laser cladding is supplied at a speed of 38-40g/min, and the diameter of the alloy powder for laser cladding is in the range of 44-178 µm;

the laser beam is a rectangular spot with a length of 16mm and a width of 2mm, and the linear scanning velocity of the laser beam is in the range of 540-780mm/min, with the scanning direction of the laser beam perpendicular to the length direction of the rectangular spot.

### Solution 5

The laser cladding method according to solution 1, changed in that the alloy powder for laser cladding includes:
0.01-0.15% of C,
0.5%-1.0% of Si,
0.4-0.8% of Mn,
17.5%-19.5% of Cr,
21 %-25% of Ni,
residual amount of Fe and unavoidable impurities;
wherein the content of each element above is a content of weight percentage.

### Solution 6

The laser cladding method according to solution 1, changed in that the alloy powder for laser cladding includes:
0.05-0.20% of C,
1.0%-1.5% of Si,
0.4-0.8% of Mn,
15.0%-15.8% of Cr,
4.0%-4.5% of Ni,
the balance of Fe and unavoidable impurities;
wherein the content of each element above is a content of weight percentage.

### Solution 7

The laser cladding method according to any one of solutions 1-6, changed in that the outer diameter of the hydraulic support column is in the range of 200-400mm.

### Solution 8

The laser cladding method according to solution 7, changed in that the outer diameter of the hydraulic support column is in the range of 350-400mm.

With the laser cladding method according to solution 1, the energy absorption and utilization efficiency of laser beam is high, and because of high energy transition efficiency of the semiconductor laser, the electric energy utilization efficiency is increased with the power consumption saved.

In addition, in the solutions of the present invention, since a semiconductor laser is used, the continuous working time can be very long. For example, in an implementation process the continuous working time can exceed 15000 hours. However, when a carbon dioxide laser is used, then the continuous working time is shorter because commonly a vacuum pumping operation needs to be performed once in every 24 hours.

With the laser cladding methods according to solutions 2-3 improved from solution 1, good process parameters are selected, i.e., the cooperative relationship between the distance from the laser beam outlet of the semiconductor laser to the surface of the hydraulic support column and the power density of the laser beam emitted from the semiconductor laser is optimized, so that laser cladding is performed effectively.

Solution 4 is a detailed embodiment, wherein many process parameters are defined, so that precise operating process parameters are provided to those skilled in the art.

With respect to the hydraulic support column obtained according to the above solution 5, because of the specific composition of the laser cladding layer, a good surface hardness, a long service life, a high bonding strength between the cladding layer and the metallic body, and a good salt spray resistance can be obtained. The hardness of the cladding layer on the surface of the hydraulic support column can exceed 30 HRC, the service life in mines is over 5 years, the bonding strength between the cladding layer and the metallic body can exceed 310MPa, and the salt spray resistance can be maintained over 96 hours.

With respect to the hydraulic support column obtained according to the above solution 6, on one aspect, the hydraulic support column has all of the performances of the hydraulic support column obtained according to the above solution 5. For example, the service life in mines is over 5 years, the bonding strength between the cladding layer and the metallic body can exceed 310MPa, and the salt spray resistance can be maintained over 96 hours. Moreover, the hardness of the cladding layer can exceed 45HRC. Also, the cost is low because of the low content of Ni.

With the laser cladding method according to solutions 7 and 8, a preferable outer diameter of the hydraulic support column is given. Also, it is better for the outer diameter of the hydraulic support column to be larger. This is because that when the outer diameter of the hydraulic support column is larger, the outer surface of the column will be more close to a plane, and then the energy of the laser beam emitted from the semiconductor laser will be distributed more evenly on the surface of the hydraulic support column. But on the other aspect, the outer diameter of the surface of the hydraulic support column should not be too large. This is because that larger clamping means and larger carrying means are needed if the outer diameter of the hydraulic support column is too larger. Therefore, the outer diameter of a preferable hydraulic support column is in the range of 200-400mm, more preferably 350-400mm. An even cladding could be achieved and loads for the other devices could be reduced when the outer diameter is within the above ranges.

### DETAILED DESCRIPTION

The solutions of the present invention will be described in detail with reference to the embodiments, so that the solutions of the present invention will be more apparent to those skilled in the art.

### First embodiment

The embodiment is a laser cladding method for mining hydraulic support column.

The hydraulic support column used in the embodiment is a mining hydraulic support column used by XINJULONG ENERGY CO., LTD. of INWEN MINING GROUP. The column is a hydraulic support column with a body of 27SiMn and a diameter of 300mm.

The laser cladding is performed with the following method:
1. Performing the process of rust removing and the process of texturing to the mining hydraulic support column.
2. Mounting the mining hydraulic support column into the laser process machine which is a semiconductor laser process machine, i.e. a laser process machine with a semiconductor laser.
3. Under the cooperation of the rotary motion of the main shaft C and the feeding motion of the linear shaft of the laser head X, powder feeding and laser cladding are carried out simultaneously in one process step. The output power of the semiconductor laser is 4000W, the distance from the laser beam outlet of the semiconductor laser to the surface of the hydraulic support column is 200mm, the linear scanning velocity of the laser beam is 540mm/min, and the laser beam is a 16*2 rectangular spot (with a length of 16mm and a width of 2mm). Performing the cladding in a scanning cladding manner.
   The adopted composition for laser cladding is in powder form with particle size in the range of 44-178 µm. The composition includes 0.05% of C, 1.5% of Si, 0.4% ofMn, 15.8% of Cr, 4.0% of Ni, the balance of Fe and few unavoidable impurities. The alloy powder for laser cladding is fed at the powder feeding speed of 38-40g/min.
4. Performing the machining.

It should be noted that in the embodiment, the total installed power of the semiconductor laser is 45KW (kilowatt), the continuous power output of the semiconductor laser is 4000W, the absorption efficiency of metallic material (i.e., the absorption efficiency of the column) is 80%, the dimensions of the semiconductor laser is 260mm × 118mm × 450mm, the weight of the semiconductor laser is 27kg, and the continuous working time can achieve 15000 hours.

In the embodiment, the heat absorbed by the metallic material is 3200KW.

The following are performance indexes tested in the experiments and tests to the obtained column:
1. No cracks.
2. The hardness of the cladding layer can exceed 45 HRC, the service life in mines is over 5 years, the bonding strength between the cladding layer and the column body can exceed 310MPa, and the salt spray resistance can be maintained over 96 hours.

With regard to the service life, the column has been promoted and used in XINJULONG ENERGY CO., LTD. of XINWEN MINING GROUP with good effects. The column has been used at the mining face for four years without any quality problem.

With regard to the experiment of salt spray resistance, China National Standard GB/T10125-1997 is adopted, and the reagent used in the experiment is aqueous solution of sodium chloride with the concentration of 50g/L ± 5g/L, a PH value of 6.5-7.2, and a temperature of 35°C±2°C.

The cost is low because of the low content of Ni in the embodiment.

### Second embodiment

The embodiment is a laser cladding method for mining hydraulic support column.

The hydraulic support column used in the embodiment is a mining hydraulic support column used by XINJULONG ENERGY CO., LTD. of XINWEN MINING GROUP. The column is a hydraulic support column with a body of 27SiMn and a diameter of 400mm.

The laser cladding is performed with the following method:
1. Performing the process of rust removing and the process of texturing to the mining hydraulic support column.
2. Mounting the mining hydraulic support column into the laser process machine which is a semiconductor laser process machine.
3. Under the cooperation of the rotary motion of the main shaft C and the feeding motion of the linear shaft of the laser head X, powder feeding and laser cladding are carried out simultaneously in one process step. The output power of the semiconductor laser is 4000W, the distance from the laser beam outlet of the semiconductor laser to the surface of the hydraulic support column is 250mm, the linear scanning velocity of the laser beam is 600mm/min, and the laser beam is a 16*2 rectangular spot (with a length of 16mm and a width of 2mm). Performing the cladding in a scanning cladding manner.
   The adopted composition for laser cladding is in powder form with particle size in the range of 44-178 µm. The composition includes 0.15% of C, 1.0% of Si, 0.8% of Mn, 15.0% of Cr, 4.5% of Ni, the balance of Fe and unavoidable impurities. The alloy powder for laser cladding is fed at the powder feeding speed of 38-40g/min.
4. Performing the machining.

It should be noted that in the embodiment, the total installed power of the semiconductor laser is 45KW (kilowatt), the continuous power output of the semiconductor laser is 4000W, the absorption efficiency of metallic material is 80%, the dimensions of the semiconductor laser is 260mm × 118mm × 450mm, the weight of the semiconductor laser is 27kg, and the continuous working time can achieve 15000 hours.

The following are performance indexes tested in the experiments and tests to the obtained column:
1. No cracks.
2. The hardness of the cladding layer can exceed 45 HRC, the service life in mines is over 5 years, the bonding strength between the cladding layer and the column body can exceed 310MPa, and the salt spray resistance can be maintained over 96 hours.

### Embodiment for comparing

The embodiment is a laser cladding method for mining hydraulic support column.

The hydraulic support column used in the embodiment is a mining hydraulic support column used by XINJULONG ENERGY CO., LTD. of XINWEN MINING GROUP. The column is a hydraulic support column with a body of 27SiMn and a diameter of 300mm.

The laser cladding is performed with the following method:
1. Performing the process of rust removing and the process of texturing to the mining hydraulic support column.
2. Mounting the mining hydraulic support column into the laser process machine which is a semiconductor laser process machine.
3. Under the cooperation of the rotary motion of the main shaft C and the feeding motion of the linear shaft of the laser head X, powder feeding and laser cladding are carried out simultaneously in one process step. The output power of the semiconductor laser is 4000W, the distance from the laser beam outlet of the semiconductor laser to the surface of the hydraulic support column is 250mm, the linear scanning velocity of the laser beam is 600mm/min, and the laser beam is a 16*2 rectangular spot (with a length of 16mm and a width of 2mm). Performing the cladding in a scanning cladding manner.
   The adopted composition for laser cladding is in powder form with particle size in the range of 44-178 µm. The composition includes 0.15% of C, 1.0% of Si, 0.8% of Mn, 18.0% of Cr, 22.0% of Ni, the balance of Fe and unavoidable impurities. The alloy powder for laser cladding is fed at the powder feeding speed of 38-40g/min.
4. Performing the machining.

It should be noted that in the embodiment, the total installed power of the semiconductor laser is 45KW, the continuous power output of the semiconductor laser is 4000W, the absorption efficiency of metallic material is 80%, the dimensions of the semiconductor laser is 260mm × 118mm × 450mm, the weight of the semiconductor laser is 27kg, and the continuous working time can achieve 15000 hours.

The following are performance indexes tested in the experiments and tests to the obtained column:
1. No cracks.
2. The hardness of the cladding layer can exceed 30 HRC, the service life in mines is over 5 years, the bonding strength between the cladding layer and the column body can exceed 310MPa, and the salt spray resistance can be maintained over 96 hours.

### Embodiment for comparing

The embodiment is a laser cladding method for mining hydraulic support column.

The hydraulic support column used in the embodiment is a mining hydraulic support column used by XINJULONG ENERGY CO., LTD. of XINWEN MINING GROUP. The column is a hydraulic support column with a body of 27SiMn and a diameter of 300mm.

The laser cladding is performed with the following method:
1. Performing the process of rust removing and the process of texturing to the mining hydraulic support column.
2. Mounting the mining hydraulic support column into the laser process machine which is a carbon dioxide laser process machine, i.e. a laser process machine with a carbon dioxide laser.
3. Under the cooperation of the rotary motion of the main shaft C and the feeding motion of the linear shaft of the laser head X, powder feeding and laser cladding are performed in synchronization in one process step. The output power of the carbon dioxide laser is 8000W, the distance from the laser beam outlet of the laser to the surface of the hydraulic support column is 300mm, the linear scanning velocity of laser is 480mm/min, and the laser beam is a 15*2.5 rectangular spot (with a length of 15mm and a width of 2.5mm). Performing the cladding in a scanning cladding manner.
   The adopted composition for laser cladding is in powder form with particle size in the range of 44-178 µm. The composition includes 0.02% of C, 1.5% of Si, 0.4% of Mn, 15.8% of Cr, 4.0% of Ni, the balance of Fe and unavoidable impurities. The alloy powder for laser cladding is fed at the powder feeding speed of 38-40g/min.
4. Performing the machining.

It should be noted that said carbon dioxide laser is a laser functioning with carbon dioxide as gain medium and lighting by means of transition of the carbon dioxide among energy bands. In the embodiment, the total installed power of the carbon dioxide laser is 175KW, the continuous power output of the carbon dioxide laser is 8000W, the absorption efficiency of metallic material (i.e., the absorption efficiency of the column) is 40%, the dimensions of the carbon dioxide laser is 2500mm × 1500mm × 2300mm, the weight of the carbon dioxide laser is 4000kg, and the continuous working time is 24 hours because a vacuum pumping process needs to be performed once in every 24 hours for such laser.

In the embodiment, the heat absorbed by the metallic material is 3200KW.

It can be seen that the carbon dioxide laser is large in size and inconvenient to be operated. In addition, the continuous power output of the carbon dioxide laser cannot be lowered to 4000W, so that power consumption cannot be decreased significantly.

The following are performance indexes tested in the experiments and tests to the obtained column:
1. No cracks.
2. The hardness of the cladding layer can exceed 45 HRC, the service life in mines is over 5 years, the bonding strength between the cladding layer and the column body can exceed 310MPa, and the salt spray resistance can be maintained over 96 hours.

## Claims

1. A laser cladding method, **characterized in that** using laser beam emitted from a semiconductor laser to melt alloy powder for laser cladding on the surface of a hydraulic support column;
the semiconductor laser is a laser functioning with semiconductor material as gain medium and lighting by means of transition of the semiconductor material among energy bands,
**characterized in that** the alloy powder for laser cladding includes:
0.05-0.20% of C,
1.0%-1.5% of Si,
0.4%-0.8% of Mn,
15.0%-15.8% of Cr,
4.0%-4.5% of Ni,
the balance of Fe and unavoidable impurities;
wherein the content of each element above is a content of weight percentage.

2. The laser cladding method according to Claim 1, **characterized in that** the distance from a laser beam outlet of the semiconductor laser to the surface of the hydraulic support column is in the range of 150-250mm, and the power density of the laser beam emitted from the semiconductor laser is above 109.38W/mm².

3. The laser cladding method according to Claim 2, **characterized in that** the distance from the laser beam outlet of the semiconductor laser to the surface of the hydraulic support column is in the range of 190-220mm, and the power density of the laser beam emitted from the semiconductor laser is above 112.63 W/mm².

4. The laser cladding method according to Claim 3, **characterized in that** the alloy powder for laser cladding is supplied at a speed of 38-40g/min, and the diameter of the alloy powder for laser cladding is in the range of 44-178 µm;
the laser beam is a rectangular spot with a length of 16mm and a width of 2mm, and the linear scanning velocity of the laser beam is in the range of 540-780mm/min, with the scanning direction of the laser beam perpendicular to the length direction of the rectangular spot.

5. The laser cladding method according to any one of Claims 1-4, **characterized in that** the outer diameter of the hydraulic support column is in the range of 200-400mm.

6. The laser cladding method according to Claim 5, **characterized in that** the outer diameter of the hydraulic support column is in the range of 350-400mm.

## Patentansprüche

1. Laserbeschichtungsverfahren, **dadurch gekennzeichnet, dass** ein von einem Halbleiterlaser emittierter Laserstrahl verwendet wird, um Legierungspulver zum Laserbeschichten auf der Oberfläche einer hydraulischen Trägersäule geschmolzen wird; wobei der Halbleiterlaser ein Laser ist, der mit Halbleitermaterial als Verstärkungsmedium und Beleuchtung mittels eines Übergangs des Halbleitermaterials zwischen Energiebändern funktioniert, **dadurch gekennzeichnet, dass** das Legierungspulver zum Laserbeschichten umfasst:
0,05-0,20% C,
1,0%-1,5% Si,
0,4%-0,8% Mn,
15,0%-15,8% Cr,
4,0%-4,5% Ni,
der Rest Fe und unvermeidbare Fremdstoffe;
wobei der Gehalt jedes obigen Elements ein Gehalt in Gewichtsprozent ist.

2. Laserbeschichtungsverfahren nach Anspruch 1, **dadurch gekennzeichnet, dass** der Abstand von dem Laserstrahlauslass des Halbleiterlasers bis zur Oberfläche der hydraulischen Trägersäule in dem Bereich von 150-250 mm liegt, und die Leistungsdichte des von dem Halbleiterlaser emittierten Laserstrahls über 109,38 W/mm² beträgt.

3. Laserbeschichtungsverfahren nach Anspruch 2, **dadurch gekennzeichnet, dass** der Abstand von dem Laserstrahlauslass des Halbleiterlasers bis zur Oberfläche der hydraulischen Trägersäule im Bereich von 190-220 mm liegt, und die Leistungsdichte des von dem Halbleiterlaser emittierten Laserstrahls über 112,63 W/mm² beträgt.

4. Laserbeschichtungsverfahren nach Anspruch 3, **dadurch gekennzeichnet, dass** das Legierungspulver zum Laserbeschichten mit einer Geschwindigkeit von 38-40 g/min zugeführt wird, und der Durchmesser des Legierungspulvers zum Laserbeschichten im Bereich von 44-178 µm liegt;
wobei der Laserstrahl ein rechteckiger Fleck mit einer Länge von 16 mm und einer Breite von 2 mm ist, und die lineare Abtastgeschwindigkeit des Laserstrahls im Bereich von 540-780 mm/min liegt, wobei die Abtastrichtung des Laserstrahls senkrecht zu der Längsrichtung des rechteckigen Flecks liegt.

5. Laserbeschichtungsverfahren nach einem der Ansprüche 1-4, **dadurch gekennzeichnet, dass** der Außendurchmesser der hydraulischen Trägersäule im Bereich von 200-400 mm liegt.

6. Laserbeschichtungsverfahren nach Anspruch 5, **dadurch gekennzeichnet, dass** der Außendurchmesser der hydraulischen Trägersäule im Bereich von 350-400 mm liegt.

## Revendications

1. Procédé de revêtement au laser, **caractérisé en ce qu'**on utilise un faisceau laser émis depuis un laser à semi-conducteur pour faire fondre une poudre d'alliage destinée au revêtement au laser sur la surface d'une colonne support hydraulique ;
le laser à semi-conducteur est un laser fonctionnant avec un matériau semi-conducteur à titre de milieu de gain et amorcé au moyen d'une transition du matériau semi-conducteur parmi des bandes d'énergies, **caractérisé en ce que** la poudre d'alliage pour le revêtement au laser inclut :
0,05 à 0,20 % de C,
1,0 % à 1,5 % de Si,
0,4 % à 0,8 % de Mn,
15,0 % à 15,8 % de Cr,
4,0 % à 4,5 % de Ni
le reste étant du Fe et des impuretés inévitables ;
dans lequel la teneur de chaque élément ci-dessus est une teneur de pourcentage en poids.

2. Procédé de revêtement au laser selon la revendication 1, **caractérisé en ce que** la distance depuis une sortie du faisceau laser du laser à semi-conducteur à la surface de la colonne support hydraulique est dans la plage de 150 à 250 mm, et la densité de puissance du faisceau laser émis depuis le laser à semi-conducteur est au-dessus de 109,38 W/mm².

3. Procédé de revêtement au laser selon la revendication 2, **caractérisé en ce que** la distance depuis la sortie du faisceau laser du laser à semi-conducteur à la surface de la colonne support hydraulique est dans la plage de 190 à 220 mm, et la densité de puissance du faisceau laser émis depuis le laser à semi-conducteur est au-dessus de 112,63 W/mm².

4. Procédé de revêtement au laser selon la revendication 3, **caractérisé en ce que** la poudre d'alliage pour le revêtement au laser est fournie à une vitesse de 38 à 40 g/min, et le diamètre de la poudre d'alliage pour le revêtement au laser est dans la plage de 44 à 178 µm ;
le faisceau laser est une tache rectangulaire avec une longueur de 16 mm et une largeur de 2 mm, et la vitesse de balayage linéaire du faisceau laser est dans la plage de 540 à 780 mm/min, la direction de balayage du faisceau laser étant perpendiculaire à la direction en longueur de la tache rectangulaire.

5. Procédé de revêtement au laser selon l'une quelconque des revendications 1 à 4, **caractérisé en ce que** le diamètre extérieur de la colonne support hydraulique est dans la plage de 200 à 400 mm.

6. Procédé de revêtement au laser selon la revendication 5, **caractérisé en ce que** le diamètre extérieur de la colonne support hydraulique est dans la plage de 350 à 400 mm.
